# EUROPÄISCHE PATENTANMELDUNG

(11) **EP 2 213 898 A1**
(43) Veröffentlichungstag der Anmeldung: **04.08.2010**
(21) Anmeldenummer: 09177971.0
(22) Anmeldetag: 04.12.2009
(51) Int. Cl.: F16D 41/20

(54) **Lastdrehmomentsperre, Aggregat mit Lastdrehmomentsperre sowie Verfahren zum Herstellen einer Lastdrehmomentsperre**

(30) Priorität: 02.02.2009 DE 102009000545
(71) Anmelder: Robert Bosch GmbH, 70442 Stuttgart (DE)
(72) Erfinder: Dornhoefer, Gerd, 71229, Leonberg (DE); Vogt, Andreas, 71272, Renningen (DE); Dommsch, Hans-Peter, 77839, Lichtenau (DE); Lauk, Detlef, 77871, Renchen (DE)

(57) **Zusammenfassung**

Die Erfindung betrifft eine Lastdrehmomentsperre (1), umfassend ein zum Sperren eines Drehmomentes mit einem Bremskörper (3) reibschlüssig zusammenwirkendes Schlingelement (2). Erfindungsgemäß ist vorgesehen, dass an dem Schlingelement (2) und/oder an dem Bremskörper (3) eine ein Schmiermitteldepot (9) bildende Oberflächenstruktur (8) vorgesehen ist. Ferner betrifft die Erfindung ein Aggregat sowie ein Verfahren zum Herstellen einer Lastdrehmomentsperre (1).

## Beschreibung

### Stand der Technik

Die Erfindung betrifft eine Lastdrehmomentsperre, insbesondere für Kraftfahrzeuganwendungen, gemäß dem Oberbegriff des Anspruchs 1, ein Aggregat, insbesondere ein Hilfs- oder Komfortaggregat, vorzugsweise für Kraftfahrzeuganwendungen, gemäß Anspruch 7 sowie ein Verfahren zum Herstellen einer Lastdrehmomentsperre gemäß Anspruch 8.

Aus der DE 197 53 106 C2 ist eine Lastdrehmomentsperre bekannt, die in einem Antriebsstrang eingebaut ist und beim Stillstand des Antriebs selbständig die vom Abtrieb eingeleiteten Drehmomente sperrt, wohingegen die von der Antriebsseite eingeleiteten Drehmomente in beide Drehrichtungen übertragen werden. Zum Blockieren des abtriebsseitigen Drehmoments wirkt eine Schlingfeder reibschlüssig mit einem Bremskörper zusammen. Bei der bekannten Lastdrehmomentsperre ist die Kontaktfläche zwischen Schlingfeder und Bremskörper als glatte Oberfläche ausgebildet. Die bekannte Lastdrehmomentsperre hat sich bewährt. Es bestehen jedoch Bestrebungen, einerseits die Reibung beim Durchtreiben der Schlingfeder bei antriebsseitiger Drehmomenteinleitung und andererseits den Verschleiß zu minimieren und dadurch die Standzeit zu erhöhen.

### Offenbarung der Erfindung

Der Erfindung liegt daher die Aufgabe zugrunde, eine reibungs- und verschleißoptimierte Lastdrehmomentsperre bereitzustellen. Ferner besteht die Aufgabe darin, ein Aggregat, insbesondere ein Hilfs- und/oder Komfortaggregat in einem Kraftfahrzeug vorzuschlagen, welches eine entsprechend optimierte Lastdrehmomentsperre umfasst. Weiterhin besteht die Aufgabe darin, ein Verfahren zum Herstellen einer derartigen Lastdrehmomentsperre anzugeben. Diese Aufgabe wird hinsichtlich der Lastdrehmomentsperre mit den Merkmalen des Anspruchs 1, hinsichtlich des Aggregates mit den Merkmalen des Anspruchs 7 und hinsichtlich des Verfahrens mit den Merkmalen des Anspruchs 8 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen verfahrensgemäß offenbarte Merkmale als vorrichtungsgemäß offenbart gelten und beanspruchbar sein. Ebenso sollen vorrichtungsgemäß offenbarte Merkmale als verfahrensgemäß offenbart gelten und beanspruchbar sein.

Der Erfindung liegt der Gedanke zugrunde, für eine verbesserte Schmiermittelanhaftung an dem Schlingelement und/oder an dem Bremskörper (Reibschlusspartner für Schlingelement) zu sorgen, um hierdurch eine Mangelschmierung im Reibkontaktbereich zwischen Schlingelement und Bremskörper und damit Verschleißerscheinungen zu vermeiden bzw. zumindest zu minimieren. Hierzu schlägt die Erfindung vor, die Oberfläche des Schlingelementes und/oder des Bremskörpers als Fettdepot zu strukturieren, um somit in unmittelbarer Nachbarschaft zur Reibkontaktfläche ein Schmiermitteldepot, insbesondere ein Fettdepot, bereitzustellen, aus dem während des Betriebs der Lastdrehmomentsperre kontinuierlich Schmiermittel an die Kontaktfläche zwischen dem Schlingelement und dem Bremskörper abgegeben werden kann. Der Vorteil der Erfindung besteht zum einen in der Lebensdaueroptimierung durch eine optimierte Schmierung und einer verminderten Reibung beim Durchtreiben des Schlingelementes, insbesondere weil bei entsprechender Oberflächenstrukturierung eine Hydrodynamikbildung durch den sich verengenden Spalt in Bewegungsrichtung möglich wird. Zusätzlich wird durch eine ständige Schmiermittel-, insbesondere Schmierfettpräsenz die Geräuschemission der Lastdrehmomentsperre reduziert, was insbesondere bei Kraftfahrzeuganwendungen, wie Schiebedachantrieben, Sitzverstellern, Fensterhebern, Scheibenwischerantrieben, Getriebe- und Kupplungsstellern, elektrischen Lenkungen und Stellantrieben im Allgemeinen wünschenswert ist. Bevorzugt ist die Lastdrehmomentsperre derart ausgebildet, dass sie ein antriebsseitiges Drehmoment, in eine einzige oder beide Drehrichtungen, überträgt und ein abtriebsseitig eingeleitetes Drehmoment, in eine einzige oder beide Drehrichtungen, sperrt. Besonders bevorzugt ist der Einsatz einer nach dem Konzept der Erfindung ausgebildeten Lastdrehmomentsperre für Hilfs- und Komfortaggregate in Automobilen -jedoch ist die Anwendung hierauf nicht beschränkt - eine nach dem Konzept der Erfindung ausgebildete Lastdrehmomentsperre kann grundsätzlich bei sämtlichen Motorengetrieben, Antrieben und Maschinen eingesetzt werden.

In Weiterbildung der Erfindung ist mit Vorteil vorgesehen, dass die Oberflächenstruktur mindestens eine Längsnut, vorzugsweise eine Vielzahl von, insbesondere parallelen, Längsnuten und/oder mindestens eine Quernut, vorzugsweise eine Vielzahl von, insbesondere parallelen, Quernuten und/oder mindestens eine Drallnut, vorzugsweise eine Vielzahl von, insbesondere parallelen, Drallnuten und/oder mindestens eine Umfangsnut, vorzugsweise eine Vielzahl von, insbesondere parallelen, Umfangsnuten aufweist. Zusätzlich oder alternativ kann die Oberflächenstruktur Kreuzrillen (Kreuzrändel) und/oder eine Wellenprofilierung und/oder ein Fischgrätmuster aufweisen. Auch sind andere Oberflächenstrukturen denkbar - wesentlich ist in erster Linie, dass die Oberflächenstruktur derart beschaffen ist, um über einen möglichst langen Zeitraum, insbesondere über die gesamte Lebensdauer der Lastdrehmomentsperre, als Schmierfettdepot zu dienen.

Die Oberflächenstruktur sollte derart beschaffen sein, beispielsweise durch eine entsprechende Abflachung, insbesondere Abrundung, der reibbereichnahen Kanten, dass eine Schmiermittelabgabe in den Reibkontaktbereich sichergestellt ist. Die Querschnittsform der Rillen hat vorzugsweise weiche Übergänge, da bei scharfen Kanten die Gefahr besteht, dass der Schmierstoff abgestreift wird.

Im Hinblick auf die Ausbildung des Schlingelementes gibt es unterschiedliche Möglichkeiten. Besonders bevorzugt ist eine Ausführungsform, bei der das Schlingelement als Schlingfeder ausgebildet ist, wobei jedoch auch Ausführungsformen als Schlinggliederkette, Schlingband, Schlingseil oder dergleichen möglich sind. Bevorzugt ist das Schlingelement derart angeordnet, dass dessen freie Enden in Umfangsrichtung gegeneinander sowie voneinander weg bewegbar sind, um das Schlingelement für den Sperrfall reibschlüssig radial innen oder radial außen in Reibschluss mit dem Bremskörper zu bringen.

Auch im Hinblick auf die Ausbildung des Bremskörpers gibt es unterschiedliche Möglichkeiten. Besonders bevorzugt ist es, wenn der Bremskörper eine zylindrische Reibfläche (Innen- oder Außenmantelfläche) aufweist, wobei sowohl eine Ausführungsform realisierbar ist, bei der das Schlingelement mit dem Innenumfang des Bremskörpers, also mit einer am Innenumfang ausgebildeten Reibfläche, zusammenwirkt oder den Bremskörper umgibt und in diesem Fall reibschlüssig mit einem Außenumfang des Bremskörpers im Blockierfall reibschlüssig zusammenwirkt.

Die Erfindung führt auch auf ein Aggregat, insbesondere für Kraftfahrzeuganwendungen. Bei dem Aggregat kann es sich beispielsweise um einen Motor und/oder eine Maschine handeln. Ganz besonders bevorzugt handelt es sich um einen Verstellantrieb, wie einen Schiebedachantrieb, einen Fensterheberantrieb, einen Scheibenwischerantrieb oder einen Getriebe- und/oder Kupplungssteller. Es kann sich auch um eine elektrische Fahrzeuglenkung, etc. handeln. Das Aggregat zeichnet sich dadurch aus, dass dieses mit mindestens einer nach dem Konzept der Erfindung ausgebildeten Lastdrehmomentsperre versehen ist.

Ferner führt die Erfindung auf ein Verfahren zum Herstellen einer wie zuvor beschrieben ausgebildeten Lastdrehmomentsperre. Das Verfahren ist dadurch gekennzeichnet, dass das Schlingelement und/oder der Bremskörper mit einer als Schmiermitteldepot dienenden Oberflächenstruktur versehen werden. Ganz besonders bevorzugt wird die Oberflächenstruktur dabei in die Oberfläche des Schlingelementes und/oder des Bremskörpers geprägt.

Für den Fall, dass eine derartige Oberflächenstruktur in den Bremskörper bzw. in die Bremskörperoberfläche eingeprägt werden soll, ist in Weiterbildung der Erfindung mit Vorteil vorgesehen, dass die Prägung während eines Umformvorgangs zur Herstellung des Bremskörpers, insbesondere beim Tiefziehen und/oder Rollieren, erfolgt. Alternativ kann bereits ein Blech zur Herstellung des Bremskörpers, insbesondere einer Bremstrommel, vor dem Umformvorgang, insbesondere durch Prägen, als Schmiermitteldepot strukturiert werden.

Im Falle des Vorsehens einer entsprechenden Oberflächenstruktur im Schlingelement ist es bevorzugt die Oberflächenstruktur, über mindestens eine Rolle, insbesondere eine Zuführrolle für Draht, einzubringen. Anders ausgedrückt wird die Oberflächenstruktur auf den Draht, insbesondere bei der Zuführung desselben, geprägt.

Weitere Vorteile, Merkmale und Einzelheiten der Erfindung ergeben sich aus der nachfolgenden Beschreibung bevorzugter Ausführungsbeispiele sowie anhand der Zeichnungen.

### Diese zeigen in:

- Fig. 1:: in einer perspektivischen, teilgeschnittenen Darstellung eine mögliche Ausführungsform einer Lastdrehmomentsperre (Sperrkupplung),
- Fig. 2a bis 2c:: ein erstes Ausführungsbeispiel eines Bremskörpers mit Längsnuten,
- Fig. 3a bis 3c:: ein alternatives Ausführungsbeispiel eines Bremskörpers mit sich in Umfangsrichtung erstreckenden Nuten,
- Fig. 4a bis 4c:: ein weiteres alternatives Ausführungsbeispiel eines Bremskörpers mit Drallnuten,
- Fig. 5a bis 5c:: ein weiteres alternatives Ausführungsbeispiel eines Bremskörpers mit einer Kreuzrillenoberflächenstruktur,
- Fig. 6:: ein mögliches Ausführungsbeispiel für eine Oberflächenstruktur eines Schlingelementes, wobei die Oberflächenstruktur eine Längsnut umfasst,
- Fig. 7:: ein alternatives Ausführungsbeispiel eines Schlingelementes mit einer Anzahl von Quernuten,
- Fig. 8:: ein weiteres alternatives Ausführungsbeispiel eines Schlingelementes mit einer gewellten Oberflächenstruktur,
- Fig. 9:: ein weiteres alternatives Ausführungsbeispiel eines Schlingelementes mit einer Kreuzrillenstruktur, und
- Fig. 10:: ein weiteres alternatives Ausführungsbeispiel eines Schlingelementes mit einer Fischgrätmusterstruktur.

In den Figuren sind gleiche Elemente und Elemente mit der gleichen Funktion mit den gleichen Bezugszeichen gekennzeichnet.

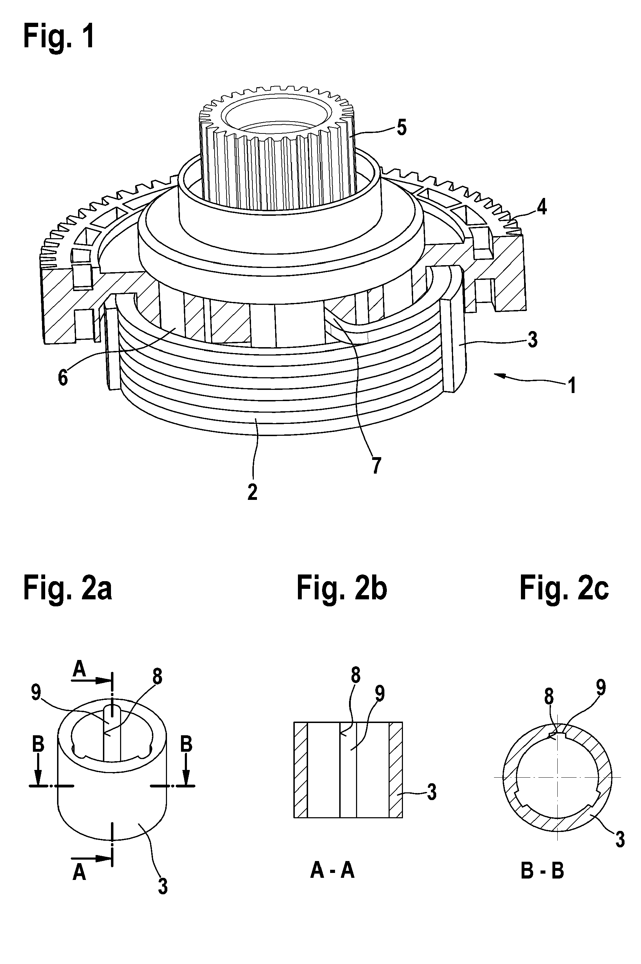

In Fig. 1 ist eine mögliche Ausführungsform einer dauerhaft kuppelnden, d.h. nicht entkuppelbaren, Lastdrehmomentsperre 1 gezeigt. Diese umfasst ein als Schlingfeder ausgebildetes Schlingelement 2. Das Schlingelement 2 ist in einem hohlzylindrischen Bremskörper 3 aufgenommen und wirkt im Blockierfall mit der inneren Umfangsfläche des Bremskörpers 3 zusammen. Bei einer alternativen, an sich bekannten, nicht dargestellten Ausführungsvariante wirkt das Schlingelement 2 mit dem, vorzugsweise ebenfalls zylindrischen, Außenumfang eines Bremskörpers zusammen.

Die Lastdrehmomentsperre 1 umfasst ein als Schneckenrad ausgebildetes Antriebsrad 4, das von einer nicht dargestellten, elektromotorisch angetriebenen Getriebeschnecke in beide Umfangsrichtungen antreibbar ist. Das Antriebsrad 4 ist gekoppelt mit einem Mitnehmer 5, der in axialer Richtung in Aufnahmetaschen 6 des Antriebsrades 4 eingreift. Der Mitnehmer 5 dient wiederum zur Übertragung des antriebsseitig eingeleiteten Drehmomentes an einen Verstellmechanismus, beispielsweise einen Seilzugmechanismus eines Fensterheberantriebs.

Das Schlingelement 2 weist zwei in axialer Richtung voneinander beabstandete freie Enden auf, von denen in Fig. 1 nur ein oberes, nach radial innen gebogenes freies Ende 7 gezeigt ist. Das Antriebsrad 4 wirkt derart mit dem Mitnehmer 5 zusammen, dass, wenn antriebsseitig, d.h. von dem Antriebsrad 4 ein Drehmoment eingeleitet wird, dieses auf den Mitnehmer 5 übertragen wird. Das Schlingelement 2 treibt dann durch, d.h. es wird zusammen mit dem Antriebsrad 4 und dem Mitnehmer 5 relativ zu dem feststehenden Bremskörper 3 verstellt. Für den Fall der abtriebsseitigen Drehmomenteinleitung, also der Drehmomenteinleitung über den Mitnehmer 5, werden die freien Enden 7 des Schlingelementes 2 auseinander bewegt, derart, dass sich der Außenumfang des Schlingelementes 2 vergrößert, wodurch das Schlingelement 2 reibschlüssig mit seinem Außenumfang mit dem Innenumfang des Bremskörpers 3 zusammenwirkt und somit das abtriebsseitige Drehmoment sperrt, also nicht weiter auf das Antriebsrad 4 und damit in Richtung Antriebsmotor, insbesondere einem Elektromotor (nicht dargestellt), übertragen wird.

Bei einer nicht dargestellten Ausführungsvariante einer Lastdrehmomentsperre 1, bei der das Schlingelement 2 mit dem Außenumfang eines Bremskörpers 3 zusammenwirkt, müssen die freien Enden 7, wie zuvor beschrieben, jedoch mit umgekehrtem Vorzeichen zueinander verstellt werden, um den Bremseffekt zu bewirken.

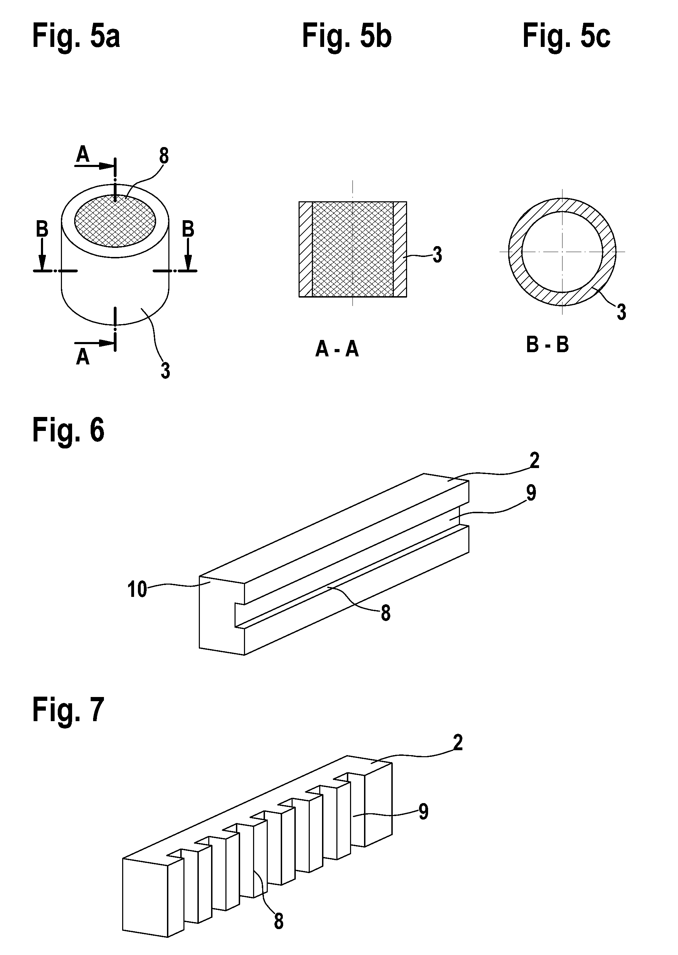

Um die Lebensdauer der Lastdrehmomentsperre 1 zu erhöhen, die Reibung zu minimieren und gleichzeitig für eine Reduktion der Geräuschemission zu sorgen, kann das Schlingelement 2 mit einer beispielsweise wie in den Fig. 6 bis 9 dargestellten Oberflächenstruktur 8 und/oder der Bremskörper 3 mit einer wie in den Fig. 2a bis Fig. 5c ausgebildeten Oberflächenstruktur 8 versehen werden. Bei der in Fig. 1 dargestellten Ausführungsform befindet sich diese Oberflächenstruktur 8 im Falle des Aufbringens auf dem Schlingelement 2 am Außenumfang des Schlingelementes und im Falle des Anbringens am Bremskörper 3 an dessen Innenumfang, also jeweils unmittelbar benachbart zum Reibkontaktbereich zwischen Schlingelement 2 und Bremskörper 3.

Fig. 2a zeigt in einer perspektivischen Darstellung ein erstes Ausführungsbeispiel eines hohlzylindrischen Bremskörpers 3, bei dem drei gleichmäßig in Umfangsrichtung verteilt angeordnete Längsnuten vorgesehen sind, die die Oberflächenstruktur 8 und damit ein Schmiermitteldepot 9 bilden. Fig. 2b zeigt eine Schnittdarstellung des Bremskörpers 3 gemäß Fig. 2a entlang der Schnittlinie A - A gemäß Fig. 2a, und Fig. 2c zeigt eine Schnittdarstellung des Bremskörpers 3 gemäß Fig. 2a entlang der Schnittlinie B - B gemäß Fig. 2a.

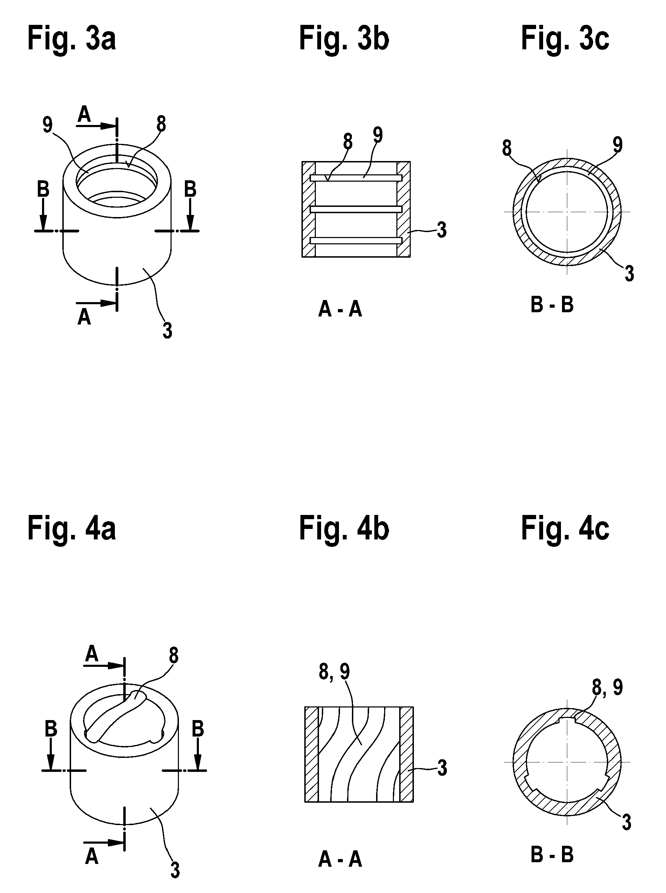

Fig. 3a zeigt einen alternativ ausgeformten Bremskörper 3, bei dem die Oberflächenstruktur 8 von mehreren in axialer Richtung beabstandeten Umfangsnuten gebildet ist. Fig. 3b und 3c zeigen analog zu den Fig. 2b und 2c entsprechende Schnittansichten.

Fig. 4a zeigt eine weitere alternative Ausführungsform einer Oberflächenstruktur an einem Bremskörper 3. Die Oberflächenstruktur ist hier von mehreren, parallel verlaufenden und sich in axialer Richtung erstreckenden Drallnuten gebildet. Fig. 4b und 4c zeigen analog zu den Fig. 2b und 2c Schnittansichten der Darstellung gemäß Fig. 4a.

Fig. 5a zeigt ein weiteres alternatives Ausführungsbeispiel eines Bremskörpers, bei dem die Oberflächenstruktur als Kreuzrillenstruktur am Innenumfang ausgebildet ist. Fig. 5b und 5c zeigen entsprechende Schnittansichten entlang der Schnittlinie A - A bzw. B - B gemäß Fig. 5a.

In Fig. 6 ist ein mögliches Ausführungsbeispiel eines in der Darstellung abgewickelten Schlingelementes 2 gezeigt. Dieses ist im Reibkontaktbereich mit einer eine Oberflächenstruktur 8 und damit ein Schmierdepot 9 bildenden Längsnut versehen, die vorzugsweise mit Hilfe von Zuführrollen in den Draht 10 eingebracht wurde.

Fig. 7 zeigt ein abgewickeltes Schlingelement 2 mit einer alternativen, aus einer Anzahl von Quernuten gebildeten, Oberflächenstruktur, die ein Schmiermitteldepot 9 bildet.

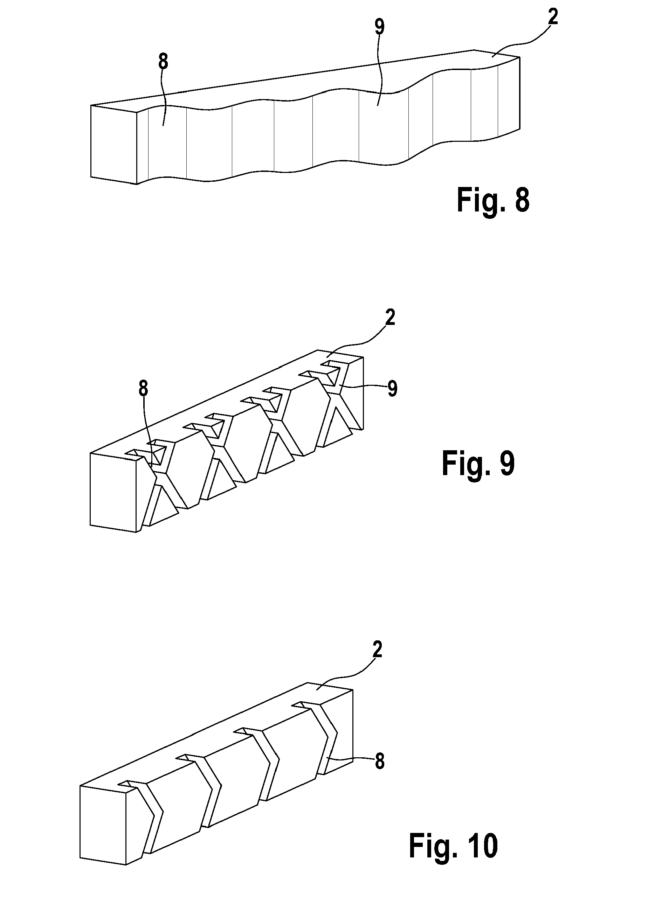

Bei dem Ausführungsbeispiel gemäß Fig. 8 wird die Oberflächenstruktur 8 von einer gewellten Oberfläche des abgewickelt dargestellten Schlingelementes 2 gebildet.

Fig. 9 zeigt eine Ausführungsform eines Schlingelementes 2, bei dem die Oberflächenstruktur aus einer Anzahl von nebeneinander angeordneten Kreuzrillen gebildet ist.

Fig. 10 zeigt eine Ausführungsform eines Schlingelementes 2 mit einer als Fischgrätmusterstruktur ausgebildeten Oberflächenstruktur 8.

## Patentansprüche

1. Lastdrehmomentsperre, umfassend ein zum Sperren eines Drehmomentes mit einem Bremskörper (3) reibschlüssig zusammenwirkendes Schlingelement (2),
**dadurch gekennzeichnet,**
**dass** an dem Schlingelement (2) und/oder an dem Bremskörper (3) eine ein Schmiermitteldepot (9) bildende Oberflächenstruktur (8) vorgesehen ist.

2. Lastdrehmomentsperre nach Anspruch 1,
**dadurch gekennzeichnet,**
**dass** die Oberflächenstruktur (8) mindestens eine Längsnut und/oder mindestens eine Quernut und/oder mindestens eine Drallnut und/oder Kreuzrillen und/oder ein Wellenprofil umfasst.

3. Lastdrehmomentsperre nach einem der Ansprüche 1 oder 2,
**dadurch gekennzeichnet,**
**dass** die Oberflächenstruktur (8) eingeprägt ist.

4. Lastdrehmomentsperre nach einem der vorhergehenden Ansprüche,
**dadurch gekennzeichnet,**
**dass** die Oberflächenstruktur (8) derart ausgebildet ist, dass Schmiermittel aus dem Schmiermitteldepot (9) an eine Kontaktfläche zwischen Bremskörper (3) und Schlingelement (2) abgebbar ist.

5. Lastdrehmomentsperre nach einem der vorhergehenden Ansprüche,
**dadurch gekennzeichnet,**
**dass** das Schlingelement (2) als Schlingfeder, Schlinggliederkette, Schlingband, oder Schlingseil ausgebildet ist.

6. Lastdrehmomentsperre nach einem der vorhergehenden Ansprüche,
**dadurch gekennzeichnet,**
**dass** der Bremskörper (3) als Zylinder, insbesondere als Hohlzylinder, ausgebildet ist.

7. Aggregat, insbesondere für Kraftfahrzeuganwendungen, insbesondere Motor, Maschine, Verstellantrieb, Schiebedachantrieb, Fensterheberantrieb, Scheibenwischerantrieb, Getriebe- und/oder Kupplungssteller, oder elektrische Kraftfahrzeuglenkung, mit einer Lastdrehmomentsperre (1) nach einem der vorhergehenden Ansprüche.

8. Verfahren zum Herstellen einer Lastdrehmomentsperre (1) nach einem der Ansprüche 1 bis 6,
**dadurch gekennzeichnet,**
**dass** das Schlingelement (2) und/oder der Bremskörper (3) mit einer ein Schmiermitteldepot (9) bildenden Oberflächenstruktur (8) versehen werden/wird.

9. Verfahren nach Anspruch 8,
**dadurch gekennzeichnet,**
**dass** die Oberflächenstruktur (8) während eines Umformvorgangs bei der Herstellung des Bremskörpers (3) in diesen eingeprägt wird.

10. Verfahren nach einem der Ansprüche 8 oder 9,
**dadurch gekennzeichnet,**
**dass** die Oberflächenstruktur (8) während der Herstellung des Schlingelementes (2) von einer, insbesondere als Zuführrolle ausgebildeten, Rolle eingeprägt wird.
